# EUROPÄISCHE PATENTSCHRIFT

(11) **EP 2 626 274 B1**
(45) Veröffentlichungstag und Bekanntmachung des Hinweises auf die Patenterteilung: **19.07.2017**
(21) Anmeldenummer: 13153882.9
(22) Anmeldetag: 04.02.2013
(51) Int. Cl.: B62B 3/14, F16B 7/04

(54) **TRANSPORTWAGEN**
TRANSPORT TROLLEY
CHARIOT DE TRANSPORT

(30) Priorität: 07.02.2012 DE 102012100994
(43) Veröffentlichungstag der Anmeldung: 14.08.2013
(73) Patentinhaber: Wanzl Metallwarenfabrik GmbH, 89340 Leipheim (DE)
(72) Erfinder: Eichele, Hermann, 89340 Leipheim (DE); Baumeister, Jörg, 86381 Krumbach (DE); Huber, Roland, 87727 Klosterbeuren (DE); Horn, Karl-Heinz, 86381 Krumbach/Niederraunau (DE)

(56) Entgegenhaltungen:
- DE-A1- 10 242 631
- DE-A1-102008 045 144
- US-A- 5 454 661
- US-A1- 2004 066 012

## Beschreibung

Die Erfindung betrifft einen stapelbaren Transportwagen mit den Merkmalen im Oberbegriff des Hauptanspruchs. Einen derartigen Transportwagen zeigt die DE 102 42 631 A1.

Stapelbare Transportwagen sind aus dem Stand der Technik bekannt. Ein solcher Transportwagen ist beispielsweise in dem europäischen Patent 1 194 324 B1 offenbart. Zum sicheren Anordnen des Korbes an den Trägern des Wagens ist dieser mit Aufnahmen ausgestattet. Der Korb des Wagens ist vorzugsweise oder überwiegend aus einem Kunststoff hergestellt. Die Träger führen hin bis zum Schiebegriff, mit dem sie dann verbunden werden.

Da ein solches Fahrgestell mit zwei nach oben ragenden Holmen z.B. bei den verschiedenen Stufen des Fertigungsprozesses oder beim Transport sehr viel Raum einnimmt, gab es bereits in der Vergangenheit Überlegungen, einen zweiteiligen Wagen herzustellen, bei dem Korb, Schiebegriff und ein Teil der Träger ein erstes Teil und das Untergestell ein zweites Teil bilden, wobei beide Teile dann aufeinander gesteckt werden. Diese Idee wurde bereits in der US 4,097,056 offenbart.

Einen Schwachpunkt bei einem solchen Wagens stellt jedoch die Verbindung zwischen dem ersten und dem zweiten Teil dar.

Weiterhin sind aus dem Stand der Technik verschiedene Arten von Verbindungselementen bekannt, die vielseitig Verwendung finden. Ein solches Verbindungselement ist z.B. in der deutschen Gebrauchsmusterschrift 93 11 064.2 beschrieben. Dieses Element weist einen festen Kern und einen elastischen Überzug auf. Der Kern ist aus Metall oder Aluminium hergestellt. Als Querschnitt ist die Form eines Vierkantrohres verwendet worden. Ferner ist ein Mittelstück vorgesehen, das als Abstandsteil fungiert. Ein solches Verbindungselement wird vorzugsweise bei zusammengesetzten Flächenbauelementen, wie sie beispielsweise bei der Innenraumgestaltung von Geschäften und Büros oder Messen als Raumteiler genutzt werden, verwendet.

Weitere solcher Verbindungselemente sind z.B. aus der US 5,454,661, der DE 198 38 125 C1 und der US 4,157,801 bekannt.

Ferner bietet die Firma 3D-plastic Hans Kintra GmbH, 41236 Mönchengladbach (www.3d-plastic.eu) ein Verbindungselement an, das im Inneren mit einem quadratischen Stahlkern ausgestattet ist. Dieses kann insbesondere auch bei Ovalrohren Einsatz finden.

Die Aufgabe der vorliegenden Erfindung besteht darin, einen stapelbaren Wagen aufzuzeigen, der z.B. während des Fertigungsprozesses oder des Transportes weniger Raum einnimmt.

Die Erfindung löst die Aufgabe mit den Merkmalen im Hauptanspruch. Weitere vorteilhafte Ausführungen sind in den Unteransprüchen beschrieben.

Das Verbindungselement stellt eine dauerhafte und sichere Verbindung zwischen den Endteilen von Fahrgestell und Träger her.

Ein solches Verbindungselement kann aufgrund seiner Materialeigenschaften bereits vor dem Galvanikprozess in einem der beiden Enden angeordnet werden.

Durch die Riffelung ist ein leichtes Einbringen des Verbindungselements in die Enden von Fahrgestell und Träger gegeben. Zudem verhindert die Riffelung durch die entsprechend ausgeformten Lamellen ein selbstständiges Lösen des Verbindungsteils.

Das Verbindungteil kann kostengünstig durch ein Spritzgussverfahren hergestellt werden.

Die Erfindung wird anhand eines Ausführungsbeispiel näher erläutert. Es zeigt
- Fig. 1: ein Verbindungselement, zwischen einem Endteil eines Fahrgestells und einem Endteil eines Trägers,
- Fig. 2, 3: dasselbe Verbindungselement in Seitenansicht,
- Fig. 4: in perspektivischer Ansicht,
- Fig. 5, 7: in Schnittansicht mit Aufnahmen und ohne Stabilisierungsteile,
- Fig. 6, 8: in Schnittansicht mit Stabilisierungsteilen.

Die Erfindung betrifft einen stapelbaren Transportwagen mit einem Fahrgestell 1 und mit einem Korb, wobei das Fahrgestell 1 mit zwei Trägern 2, ausgestattet ist. An den Trägern 2 ist ein Schiebegriff angeordnet. Der Transportwagen ist in einzelne Teile zerlegbar. Hierfür sind die beiden Träger 2 unter Verwendung eines Verbindungsmittels 3 wechselbar am Fahrgestell 1 anbringbar.

Zum dauerhaft sicheren Anordnen der Träger 2 am Fahrgestell 1, ist zwischen jedem Träger 2 und dem Fahrgestell 1 ein Verbindungselement 3 angeordnet.

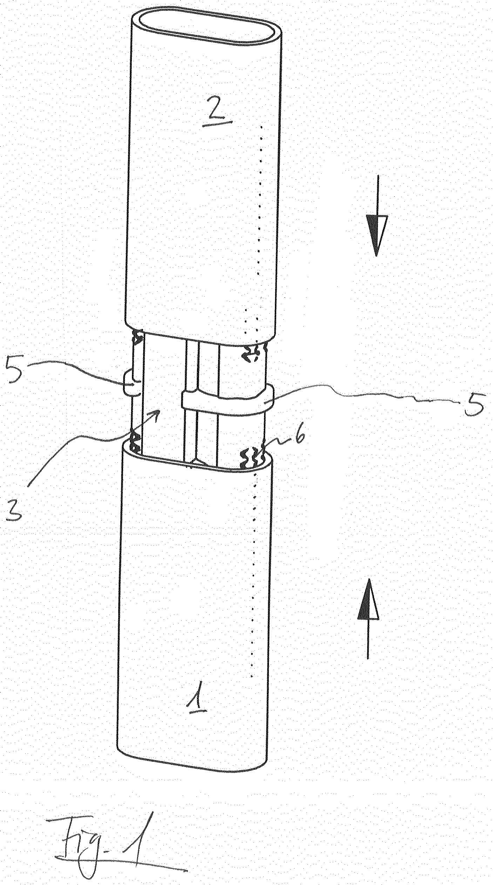

Dieses Verbindungselement 3 wird in das Rohr des Trägers 2 und des Untergestells 1 eingebracht. Vorzugsweise ist das Rohr von Träger 2 und Untergestell 1, wie aus dem Stand der Technik bekannt, ein Ovalrohr. Ein Verbindungselement 3, das in das Ovalrohr des Trägers 2 und des Untergestells 1 eingebracht wird, ist Fig. 1 zu entnehmen.

Das Verbindungselement 3 weist eine Riffelung 6 auf, die bewirkt, das das Verbindungselement 3 auf einfache Weise in das Ovalrohr von Träger 2 und Untergestell 1 eingebracht werden kann, aber nur sehr schwierig demontiert werden kann. Die Riffelung 6 ist vorzugsweise aus Lamellen gebildet, die entsprechend hierfür geformt sind, so dass die zum Einbringen eines Verbindungselements 3 notwendige Kraft kleiner ist, als die Kraft, die aufgebracht werden muss, um das Verbindungselement 3 zu demontieren. Hierfür bietet sich eine asymmetrische Form der Lamellen an, die zum Abstandsring 5 einen steileren Winkel aufweisen, als zum Ende des Verbindungselements 3.

Ferner kann durch diese Riffelung eine mögliche Toleranzabweichung des Innenumfangs des Rohres von Fahrgestell 1 oder Träger 2 ausgeglichen werden.

Das Verbindungselement 3 ist einteilig ausgeführt. Ferner weist das Verbindungselement 3 zwei Stabilisierungsteile 4 auf, die in Aufnahmen 7 wechselbar angeordnet sind. Die Stabilisierungsteile 4 sind vorzugsweise aus einem Stahldraht mit einem Durchmesser von 13 mm gebildet; das Stabilisierungsteil 4 weist somit einen kreisförmigen Querschnitt auf. Alternativ kann ein Rohr mit entsprechendem Durchmesser eingesetzt werden.

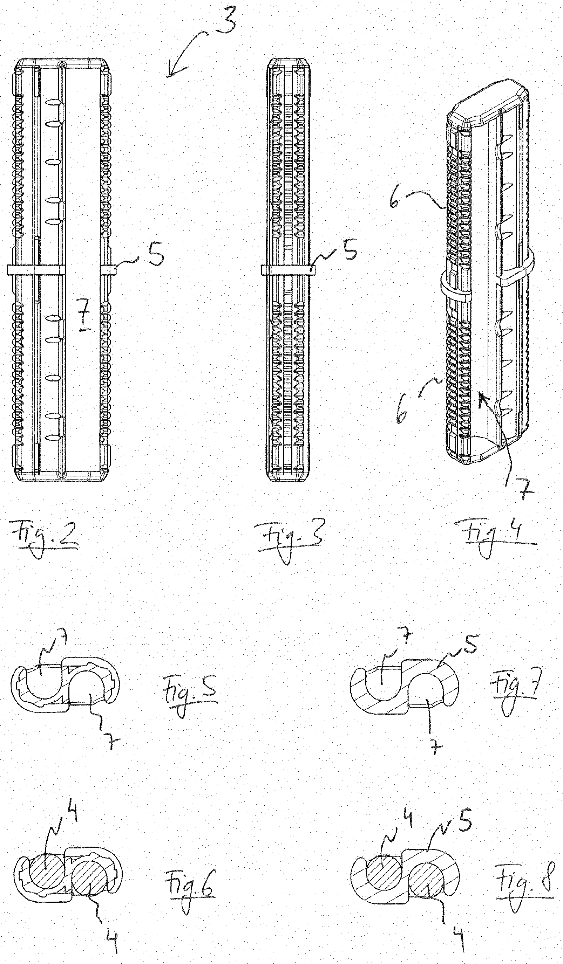

Bei Verwendung eines Ovalrohrs, für die Enden von Fahrgestell 1 und Träger 2, wie dies in Figur 1 dargestellt ist, bietet es sich an, dass für das Stabilisierungsteil 4 ein runder Querschnitt verwendet wird. Der Querschnitt des Verbindungselements 3 ist - wie dies auch in den Figuren 2 bis 8 gezeigt ist - oval.

Bei Einsatz eines Rohres für die Enden von Fahrgestell 1 und Träger 2 mit einem anderen Querschnitt wäre auch ein anderer Querschnitt des Stabilisierungsteils 4 notwendig. Zudem wäre dann ggf. die Anzahl der Stabilisierungsteile 4 anzupassen.

Eine Aufnahme 7 ist im vorliegenden Beispiel auf der Vorderseite des Verbindungselements 3 und eine zweite Aufnahme 7 ist auf der Rückseite des Verbindungselements vorgesehen.

Jede Aufnahme ist entsprechend für die Aufnahme des Stabilisierungsteils 4 geformt, wobei jedes Stabilisierungsteil 4 wechselbar in einer der beiden Aufnahmen 7 angeordnet ist.

Zum einfachen Einbringen der Stabilisierungsteile 4 ist das Verbindungselement 3 symmetrisch ausgeführt. Somit ist auch ein einfaches und fehlerfreies Einsetzten in das Rohr von Träger 2 und Fahrgestell 1 gewährleistet.

Das Verbindungselement 3 weist einen Abstandsring 5 auf. Dieser ist mittig am Verbindungselement 3 vorgesehen und unterteilt das Verbindungselement 3 in zwei gleich große Teile, wobei ein Teil in das Rohr des Trägers 2 und das zweite Teil in das Rohr des Fahrgestells 1 eingebracht wird. Aufgrund der Symmetrie ist es unerheblich, welches Teil in welches Rohr eingesetzt wird.

Der Abstandsring 5 stellt sowohl einen Puffer als auch eine Begrenzung zwischen Träger 2 und Fahrgestell 1 dar. Vorzugsweise entspricht der Außenumfang des Abstandsrings 5 dem Außenumfang der Enden von Fahrgestell 1 und Träger 2. Eine Höhe von ca. 4 mm ist hierbei ausreichend.

Ferner werden nicht näher dargestellte Sicken am Rohr des Fahrgestells 1 und des Trägers 2 vorgesehen, die das Verbindungselement 3 zusätzlich zwischen Fahrgestell 1 und Träger 2 sichern. Eine Anzahl von zwei Sicken an jedem Ende von Fahrgestell 1 und Träger 2 im Bereich der Riffelung 6 hat sich als sinnvoll erwiesen.

Als Material hat sich der Einsatz eines glasfaserverstärkten PA66 GF40 als vorteilhaft erwiesen. Dieser bietet die Möglichkeit das Verbindungselement 3 bereits vor dem Galvanikprozess in eines der Bauteile Fahrgestell 1 oder Träger 2 einzubringen. Das Verbindungselement 3 nimmt während des Prozesses keinen Schaden. Ein ähnlicher Werkstoff wäre ebenfalls denkbar.

Ferner kann ein solches Verbindungselement 3 kostengünstig als Spritzgussbauteil hergestellt werden.

Eine Länge von ca. 155 mm hat sich im Einsatz bei den bekannten Modellen der Transportwagen mit einem vorzugsweise oder überwiegend aus Kunststoff hergestelltem Korb als sinnvoll erwiesen.

### Bezugszeichenliste

- 1: Fahrgestell
- 2: Träger
- 3: Verbindungselement
- 4: Stabilisierungsteil
- 5: Abstandsring
- 6: Riffelung
- 7: Aufnahme

## Patentansprüche

1. Stapelbarer Transportwagen mit einem Fahrgestell (1) und mit einem Korb, wobei das Fahrgestell (1) mit zwei Trägern (2) ausgestattet ist, und wobei an den Trägern (2) ein Schiebegriff angeordnet ist, und wobei ferner die Träger (2) unter Verwendung eines Verbindungselements (3) am Fahrgestell (1) anbringbar sind,
wobei zwischen jedem Träger (2) und dem Fahrgestell (1) ein Verbindungselement (3) angeordnet ist, **dadurch gekennzeichnet,**
**dass** ein Teil des Verbindungselementes (3) in ein Rohr des Trägers (2) und das zweite Teil in ein Rohr des Fahrgestells (1) eingebracht wird,
**dass**
das Verbindungselement (3) zwei Stabilisierungsteile (4) aufweist,
**dass** je eine Aufnahme (7) auf der Vorder- und Rückseite des Verbindungselements (3) vorgesehen ist, und dass der Querschnitt des Verbindungselements (3) oval ist.

2. Stapelbarer Transportwagen nach Anspruch 1, **dadurch gekennzeichnet, dass** jedes Stabilisierungsteil (4) einen kreisförmigen Querschnitt aufweist.

3. Stapelbarer Transportwagen nach einem der vorhergehenden Ansprüche, **dadurch gekennzeichnet, dass** jede Aufnahme (7) entsprechend für die Aufnahme des Stabilisierungsteils (4) geformt ist, wobei jedes Stabilisierungsteil (4) wechselbar in einer Aufnahme (7) angeordnet ist.

4. Stapelbarer Transportwagen nach einem der vorhergehenden Ansprüche, **dadurch gekennzeichnet, dass** das Verbindungselement (3) einen Abstandsring (5) aufweist, der einen Puffer zwischen Träger (2) und Fahrgestell (1) darstellt, und wobei der Außenumfang des Abstandsrings (5) dem Außenumfang des Trägers (2) entspricht.

5. Stapelbarer Transportwagen nach Anspruch 4, **dadurch gekennzeichnet, dass** der Abstandsring (5) das Verbindungselement (3) in zwei gleiche Teile unterteilt.

6. Stapelbarer Transportwagen nach einem der vorhergehenden Ansprüche, **dadurch gekennzeichnet, dass** das Verbindungselement (3) aus PA66 GF40 hergestellt ist.

## Claims

1. A nestable trolley with a wheel frame (1) and with a basket, wherein the wheel frame (1) is equipped with two supports (2), and wherein a push handle is arranged on the supports (2), and wherein further the supports (2) can be attached to the wheel frame (1) using a connecting element (3),
wherein a connecting element (3) is arranged between each support (2) and the wheel frame (1), **characterised in that** one part of the connecting element (3) is introduced into a tube of the support (2) and the second part is introduced into a tube of the wheel frame (1),
**in that** the connecting element (3) has two stabilising parts (4),
**in that** one mount (7) in each case is provided on the front side and rear side of the connecting element (3),
and **in that** the cross-section of the connecting element (3) is oval.

2. A nestable trolley according to Claim 1, **characterised in that** each stabilising part (4) has a circular cross-section.

3. A nestable trolley according to one of the preceding claims, **characterised in that** each mount (7) is shaped correspondingly for receiving the stabilising part (4), each stabilising part (4) being arranged changeably in a mount (7).

4. A nestable trolley according to one of the preceding claims, **characterised in that** the connecting element (3) has a spacer ring (5) which represents a buffer between the support (2) and wheel frame (1), and the outer periphery of the spacer ring (5) corresponding to the outer periphery of the support (2).

5. A nestable trolley according to Claim 4, **characterised in that** the spacer ring (5) divides the connecting element (3) into two equal parts.

6. A nestable trolley according to one of the preceding claims, **characterised in that** the connecting element (3) is made from PA66 GF40.

## Revendications

1. Chariot de transport imbricable comprenant un châssis (1) et un panier, ledit châssis (1) étant pourvu de deux supports (2), une poignée de poussée étant disposée sur lesdits supports (2) et lesdits supports (2) pouvant, par ailleurs, être installés sur ledit châssis (1) avec utilisation d'un élément de liaison (3),
un élément de liaison (3) étant interposé entre le châssis (1) et chaque support (2),
**caractérisé par le fait**
**qu'**une partie de l'élément de liaison (3) est insérée dans une tubulure du support (2), et la seconde partie est insérée dans une tubulure du châssis (1) ;
**que** ledit élément de liaison (3) comporte deux parties de stabilisation (4) ;
**qu'**un logement respectif (7) est prévu sur les côtés antérieur et postérieur dudit élément de liaison (3) ;
et **que** la section transversale dudit élément de liaison (3) est ovale.

2. Chariot de transport imbricable selon la revendication 1, **caractérisé par le fait que** chaque partie de stabilisation (4) présente une section transversale circulaire.

3. Chariot de transport imbricable selon l'une des revendications précédentes, **caractérisé par le fait que** chaque logement (7) est adéquatement configuré en vue de la réception de la partie de stabilisation (4), chaque partie de stabilisation (4) étant disposée dans un logement (7) de manière remplaçable.

4. Chariot de transport imbricable selon l'une des revendications précédentes, **caractérisé par le fait que** l'élément de liaison (3) comporte une bague d'espacement (5) constituant une zone tampon entre le support (2) et le châssis (1), le pourtour extérieur de ladite bague d'espacement (5) concordant avec le pourtour extérieur dudit support (2).

5. Chariot de transport imbricable selon la revendication 4, **caractérisé par le fait que** la bague d'espacement (5) scinde l'élément de liaison (3) en deux parties identiques.

6. Chariot de transport imbricable selon l'une des revendications précédentes, **caractérisé par le fait que** l'élément de liaison (3) est fabriqué en du PA66 GF40.
